# EUROPÄISCHE PATENTSCHRIFT

(11) **EP 0 453 609 B1**
(45) Veröffentlichungstag und Bekanntmachung des Hinweises auf die Patenterteilung: **06.09.1995**
(21) Anmeldenummer: 90108057.2
(22) Anmeldetag: 27.04.1990
(51) Int. Cl.: G06F 11/10

(54) **Verfahren zum Testen einer kleinsten adressierbaren Einheit eines RAM's auf über einer bestimmten Zahl liegende Bitfehler**
Procedure for testing of a smallest addressable unit of a RAM for bit errors exceeding a fixed number
Procédé pour tester la plus petite unité adressable d'un RAM pour détecter des erreurs de bits dépassant un nombre donné

(43) Veröffentlichungstag der Anmeldung: 30.10.1991
(73) Patentinhaber: SIEMENS AKTIENGESELLSCHAFT, 80333 München (DE)
(72) Erfinder: Knefel, Hans-Werner, D-8033 Martinsried (DE)

(56) Entgegenhaltungen:
- EP-A- 0 186 719
- US-A- 4 175 692
- US-A- 4 251 863
- IBM TECHNICAL DISCLOSURE BULLETIN, Band 31, Nr. 5, Oktober 1988, Seiten 352-355, New York, US; "Fully self-contained memory card extended error checking/correcting hardware implementation"

## Beschreibung

Eine übliche Methode - die sogenannte EDC-Überwachung - zum Erkennen von Fehlern des Speichermediums eines RAM-Speichersystems während dessen normalem Betrieb beruht darauf, unter der Adresse des abzuspeichernden Datenwortes zusätzlich eine bestimmte Anzahl redundanter Bits mitabzuspeichern. Diese Bits werden Kontrollbits genannt und entstehen aus dem Datenwort bzw. aus Teilen des Datenwortes unter Anwendung einer bestimmten algebraischen Vorschrift. Beim Auslesen des derart gebildeten Speicherwortes werden die Kontrollbits nach der bestimmten algebraischen Vorschrift erneut gebildet und mit den ausgelesenen Kontrollbits an sämtlichen Bitstellen verglichen. Falls für alle Kontrollbits Gleichheit besteht, schließt man daraus, daß das ausgelesene Datenwort fehlerfrei ist. Bei Ungleichheit wird aus dem Muster der Nichtübereinstimmung, dem sogenannten Syndrommuster, auf die Art des Fehlers geschlossen. Diejenigen Bitstellen der Kontrollbits, die nicht übereinstimmen, heißen Syndrome. Bestimmte Syndrommuster werden decodiert und es wird so gegebenenfalls die verfälschte Bit-Position bzw. die verfälschten Bitpositionen im Datenwort ermittelt und durch Invertieren korrigiert.

Die erneute Bildung der Kontrollbits, der Vergleich, die Decodierung der Syndrome, sowie die Korrektur und gegebenenfalls Alarmierung erfolgt heute normalerweise mit Hilfe spezieller LSI-Bausteine, den EDC-Kontrollern.

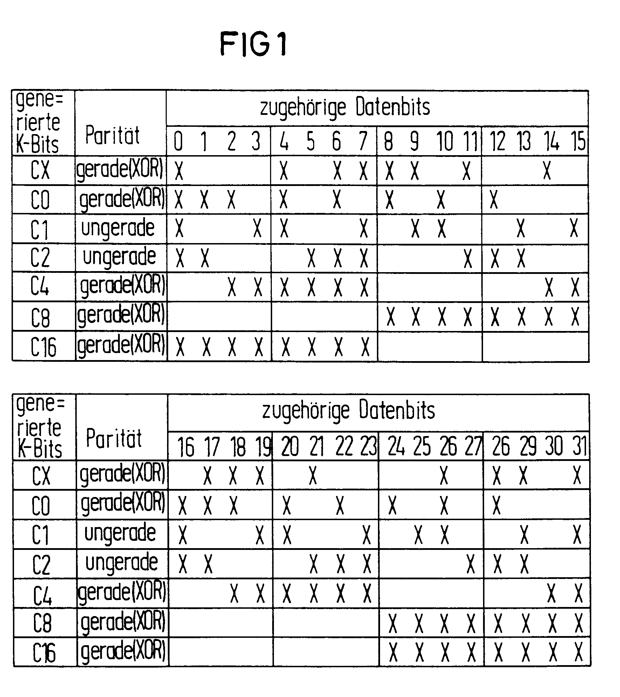

Die Figur 1 zeigt eine bestimmte algebraische Vorschrift, den sogenannten modifizierten Hamming-Code, durch den Kontrollbits in einem bestimmten Kontroller-Baustein, beispielsweise dem sogenannten Am2960, gebildet werden. Wie aus FIG 1 ersichtlich, sind Datenwörter vorausgesetzt, die 32 Datenbits umfassen. Zu diesen Datenbits werden sieben Kontrollbits CX, C0, C1, C2, C4, C8 und C16 zugeordnet, die jeweils durch Paritätsbildung über bestimmte Bitpositionen eines Datenwortes gebildet werden. Die Bitpositionen, die zur Paritätsbildung des jeweiligen Kontrollbits herangezogen werden, sind in der Figur durch ein Kreuz entsprechend markiert. Aus der Figur ist ferner ersichtlich, welche Art von Parität der Paritätsbildung zugrunde liegt. So wird beispielsweise das Kontrollbit CX in der Weise gebildet, daß sein Binärwert die Summe der Binärwerte der Bits 0, 4, 6, 7, 8, 9, 11, 14, 17, 18, 19, 21, 26, 28, 29 und 31 eines Datenwortes auf eine geradzahlige Parität ergänzt. Das Kontrollbit C2 hingegen ergänzt die Bits 0, 1, 5, 6, 7, 11, 12, 13, 16, 17, 21, 22, 23, 27, 28 und 29 auf eine ungeradzahlige Parität usw. Aufgrund dieser Vorschrift werden z. B. dem Datenwort FFFFFFFF die Kontrollbits 0001100 zugeordnet.

Es ist bekannt, die oben beschriebene EDC-Überwachung auch für den Test des Speichermediums auf Mehrfachbitfehler heranzuziehen.

Das Prinzip eines solchen Testverfahrens liegt darin, daß mit Hilfe von Lese-Schreib-Zyklen das alte, vorher ins Speichermedium eingeschriebene Testmuster ausgelesen, anhand der ebenfalls gelesenen Kontrollbits überprüft und danach das nächste Testmuster eingeschrieben wird. Damit auch Adressierungsfehler zur Anzeige von Bitfehlern führen, wird ein Testzyklus jeweils über eine Vielzahl von Adressen des Speichermediums ausgeführt, bevor das Verfahren mit dem nächsten Testzyklus fortgesetzt wird. Der Vergleich der ausgelesenen Kontrollbits mit den über die gelesenen Daten erneut gebildeten Kontrollbits geschieht durch EXOR-Bildung. Das Ergebnis dieser Operation ist das Syndrommuster, das an den ungleichen Bitstellen eine 1 erhält und wie erwähnt charakteristisch für die Art des Fehlers ist. Verwendet man für die Zuordnung der Kontrollbits beispielsweise die anhand von Figur 1 dargestellte spezielle algebraische Vorschrift, so ergibt sich bei Auftreten eines Einfachbitfehlers ein ungeradzahliges und bei Auftreten eines Doppelbitfehlers ein geradzahliges Syndrommuster. Für die nachfolgenden Ausführungen zum Stand der Technik wird davon ausgegangen, daß wegen der vernachlässigbar geringen Wahrscheinlichkeit von Fehlern höherer Ordnung Mehrfachbitfehler immer als Doppelbitfehler auftreten. Diese Annahme ist beispielsweise sicher gewährleistet, wenn das Speichermedium mit RAM-Bausteinen von 1-Bit Wortbreite aufgebaut ist und somit der gleichzeitige Ausfall zweier RAM-Bausteine höchstens einen Doppelbitfehler hervorrufen kann.

Die Zahl der möglichen Doppelbitfehler ergibt sich aus der Anzahl der Auswahlmöglichkeiten von zwei Bits aus N-Bit, wobei N die Anzahl der Bits in einem Speicherwort inklusive der Kontrollbits ist. Für jede dieser Möglichkeiten gibt es wiederrum vier Möglichkeiten des Auftretens von Doppelbitfehlern:
1. 1. Bit auf 0 verfälscht - 2. Bit auf 0 verfälscht
2. 1. Bit auf 0 verfälscht - 2. Bit auf 1 verfälscht
3. 1. Bit auf 1 verfälscht - 2. Bit auf 0 verfälscht
4. 1. Bit auf 1 verfälscht - 2. Bit auf 1 verfälscht

Die Zahl der gesamten Doppelbitfehlermöglichkeiten beträgt somit N* (N-1) *2.

Im folgenden werden zwei bekannte Testverfahren erläutert, die auf dem vorher erwähnten Testprinzip beruhen.

Bei dem Testverfahren wird zunächst ein erstes Testmuster über alle Adressen des Speichermediums eingeschrieben, dieses Testmuster später in einem zweiten Verfahrensschritt wieder ausgelesen und mit Hilfe der EDC-Sicherung auf Einfachbitfehler bzw. Doppelbitfehler überwacht. Bei Auftreten eines Einfachbitfehlers wird die betroffene Adresse mit einem zweiten Testmuster getestet, das im Datenbitteil vollständig gegenüber dem ersten Testmuster invertiert ist. Tritt hierbei nochmals ein Einfachbitfehler auf, dann gilt der Doppelbitfehler als entdeckt. Falls kein weiterer Einfachbitfehler auftritt, wird das gleiche Verfahren mit einem dritten Testmuster wiederholt, das in den zugehörigen Kontrollbits invertiert ist.

Das beschriebene erste Testverfahren kann in zwei Varianten durchgeführt werden. Die erste Variante besteht darin bei Auftreten eines Einfachfehlers die betreffende Adresse abzuspeichern, um beim Auftreten eines weiteren Einzelfehlers in einem nachfolgenden Testschritt auf das Vorhandensein eines Doppelbitfehlers schließen zu können. Der Nachteil dieser Variante besteht darin, daß sie bei Auftreten vieler Einfachbitfehler entsprechend viel Speicherplatz benötigt.

Die zweite Variante besteht darin, den Testzyklus bei Auftreten eines Einfachbitfehlers zu unterbrechen und das Verfahren bei dieser Adresse im ganzen durchzuführen. Damit erspart man sich zwar die Abspeicherung der betreffenden Adresse gegenüber der ersten Variante, muß aber zeitkostende Unterbrechungen hinnehmen. Bei Auftreten vieler Einfachbitfehler (z. B. der Fehler betrifft einen ganzen Speicherbaustein) ist dieses Verfahren somit sehr zeitraubend.

Das zweite Testverfahren besteht darin, den Test so aufzubauen, daß jede Kombination aus zwei Einfachbitfehlern bei mindestens einem Testmuster TM als Doppelbitfehler auftritt. Es folgt ein Beispiel für 8 Bits:
1. TM 00000000
2. TM 11111111
3. TM 00001111
4. TM 11110000
5. TM 00110011
6. TM 11001100
7. TM 01010101
8. TM 10101010

Die Testmuster TM entstehen durch fortgesetzte mäanderartige Unterteilung. Ihre Zahl bei N-Bits ergibt sich zu (1d N+1) *2, wobei ld den Logarithmus zur Basis 2 darstellt. Diese Mindestanzahl an Testmustern wird noch erhöht, wenn man berücksichtigt, daß auch die Kontrollbits in den Test miteinbezogen werden müssen und von den Datenbits abhängig sind. Das zweite Testverfahren benötigt damit relativ viele Testmuster bzw. Testdurchläufe.

Der Erfindung liegt die Aufgabe zugrunde, ein Verfahren anzugeben, durch das die kleinsten adressierbaren Einheiten das Speichermedium eines RAM-Speichersystems möglichst vollständig auf Verursachen von Mehrfachbitfehlern getestet werden, wobei die Testzeit möglichst kurz sein soll.

Durch die erfindungsgemäße Übertragung von Bitfehlern auf das Kontrollmuster des nächstfolgenden Testmusters wird es ermöglicht, das Testverfahren ohne Unterbrechung des fest vorgegebenen Ablaufs sowie ohne Belegung von Speicherplatz durchzuführen. Dadurch wird die erforderliche Testzeit erheblich verkürzt.

Eine bevorzugte Ausführungsform der Erfindung nach Anspruch 2 ist dadurch gekennzeichnet, daß als erstes Testmuster für jede kleinste adressierbare Einheit des Speichermediums das gleiche fest vorgegebene Bitmuster verwendet wird. Diese Ausführungsform ist sehr einfach, da sie keinen zusätzlichen Aufwand an Hardware erfordert.

Eine weitere bevorzugte Ausführungsform der Erfindung nach Anspruch 3 ist dadurch gekennzeichnet, daß als erstes Testmuster das sich bei Beginn des Tests in der jeweiligen kleinsten adressierbaren Einheit des Speichermediums befindliche Speicherwort verwendet wird, womit der Verfahrensschritt a) für das erste Testmuster als bereits ausgeführt gilt. Diese Ausführungsform hat gegenüber der vorhergenannten den Vorteil, daß die während des normalen Betriebs des Speichermediums abgespeicherten Daten durch das Testverfahren nicht verloren gehen, wenn man durch entsprechende Hardware dafür sorgt, daß das Datenmuster des dritten Testmusters nach Beendigung des Tests invertiert und somit das ursprüngliche Speicherwort wieder in die getestete kleinste adressierbare Einheit erneut eingeschrieben werden kann.

Eine weitere bevorzugte Ausführungsform der Erfindung nach Anspruch 4 besitzt insbesondere den Vorteil, die Güte des Verfahrens über mehrere Tests hinweg zu erhöhen, wobei das Datenmuster des ersten Testmusters eines Tests beispielsweise durch einen Zufallsgenerator erzeugt werden kann.

Eine weitere bevorzugte Ausführungsform der Erfindung nach Anspruch 5 besitzt insbesondere den Vorteil, auf besonders einfache Weise die erfindungsgemäße Idee, die darin besteht, die Wirksamkeit eines Bitfehlers auf die diesem Bitfehler folgenden Testmuster zu übertragen, zu verwirklichen.

Eine weitere bevorzugte Ausführungsform der Erfindung nach Anspruch 6 besitzt insbesondere den Vorteil, die erfindungsgemäße Übertragung von Bitfehlern auch für Bitfehler im Kontrollmuster zu gewährleisten.

Eine Schaltungsanordnung gemäß Anspruch 7, insbesondere zur Durchführung des erfindungsgemäßen Verfahrens nach Anspruch 1 besitzt insbesondere den Vorteil, daß sie bereits im normalen Betrieb des RAM-Speichersystems als EDC-Überwachung benützt werden kann.

Im folgenden wird eine spezielle Ausführungsform der Erfindung anhand der Zeichnungen näher erläutert.

Das erfindungsgemäße Verfahren umfaßt maximal vier Testzyklen, bei denen es sich um Lese-Schreib-Zyklen handelt, d. h. es wird bei jedem Testzyklus ein Testmuster ausgelesen, das ausgelesene Testmuster auf Bitfehler überprüft, und anschließend ein neues Testmuster eingeschrieben. Jedes Testmuster besteht dabei aus einem Datenmuster und einem Kontrollmuster, wobei das Kontrollmuster vor dem Einschreiben des Testmusters durch Paritätsbildung über das Datenmuster gemäß dem Code von Figur 1 und unter Berücksichtigung des Ergebnisses des vorherigen Testzyklus gebildet wird.

Bei einer Testvariante, bei der für jede kleinste adressierbare Einheit das gleiche erste Testmuster verwendet wird, beginnt der erste Testzyklus ohne Berücksichtigung des ausgelesenen Speicherwortes mit dem Einschreiben dieses ersten Testmusters. Das Datenmuster des ersten Testmusters ist im Prinzip beliebig, wie später noch erläutert wird, während das Kontrollmuster durch die Wahl des Datenmusters gemäß dem Code von Figur 1 festgelegt ist. Um mit dem erfindungsgemäßen Verfahren auch Adressierungsfehler erkennen zu können, wird ein Testzyklus über eine Vielzahl von Adressen des Speichermediums mit dem jeweils betreffenden Testmuster ausgeführt.

Im anschließenden zweiten Testzyklus wird das im ersten Testzyklus eingeschriebene erste Testmuster ausgelesen, auf Bitfehler überprüft, ein gegenüber dem ersten Testmuster in der Regel vollständig invertiertes zweites Testmuster gebildet und eingeschrieben. Dieser Vorgang wiederholt sich wiederum bei einer Vielzahl von Adressen des Speichermediums.

Bei einer Testvariante, bei der als erstes Testmuster das sich bei Beginn des Tests in der jeweiligen kleinsten adressierbaren Einheit befindliche Speicherwort verwendet wird, stellt dieser zweite Testzyklus den Beginn des Testverfahrens dar.

Im einzelnen erfolgt der Ablauf in der Weise, daß aus dem ausgelesenen Datenmuster des ersten Testmusters erneut ein Kontrollmuster gebildet wird und das erneut gebildete Kontrollmuster mit dem ausgelesenen Kontrollmuster verglichen wird. Der Vergleich erfolgt dabei vorzugsweise durch EXOR-Bildung der Kontrollbits des neugebildeten Kontrollmusters mit den Kontrollbits des ausgelesenen Kontrollmusters. Das Ergebnis dieser Operation ist das Syndrommuster, das an den ungleichen Bitstellen eine 1 enthält.

Anhand des Syndrommusters wird erkannt, ob ein Bitfehler aufgetreten ist und ob dieser Bitfehler über einer bestimmten Ordnung liegt. Vorzugsweise wird die bestimmte Ordnung gleich der Ordnung der im Normalbetrieb durch die EDC-Überwachung maximal korrigierbaren Bitfehler sein, da der ordnungsgemäße Betrieb des RAM-Speichersystems erst bei Bitfehlern, die nicht mehr korrigierbar sind, gestört wird. Um das Auftreten über der bestimmten Ordnung liegender Bitfehler zu vermeiden, wird das Speichermedium aus RAM-Bausteinen aufgebaut sein, die vorzugsweise eine Wortbreite aufweisen, die nicht über der bestimmten Ordnung liegt.

Im folgenden wird bei Bitfehlern, die unter bzw. über der bestimmten Ordnung liegen, abgekürzt von Einfach- bzw. Mehrfachfehlern gesprochen.

Die anhand des Syndrommusters erkannten Bitfehler werden einer Schnittstelle als Einfach- oder Mehrfachfehler signalisiert und von dieser nach den beiden Fehlerarten sortiert, zwischengespeichert. Eine Steuerung kann nach jedem Testzyklus auf diese Schnittstelle zugreifen und wird auf diese Weise über das Vorliegen eines Mehrfachfehlers informiert.

Ein wesentliches Merkmal des erfindungsgemäßen Verfahrens besteht nun darin, daß das Syndrommuster außer für die Erkennung von Mehrfachfehlern auch für die Bildung des Kontrollmusters, das für das nächste einzuschreibende Testmuster benötigt wird, herangezogen wird.

Die Bildung des zweiten Testmusters geschieht also nur bei Nichterkennen eines Bitfehlers durch vollständige Inversion des ersten Testmusters, während im Falle eines Einfachfehlers die Kontrollbits zusätzlich so modifiziert werden, daß dieser Bitfehler beim Auslesen des zweiten Testmusters im darauffolgenden Testzyklus unter dieser Adresse weiterhin wirksam bleibt, d. h. daß erneut dasselbe Syndrommuster entsteht und damit erneut ein Einfachfehler signalisiert wird, falls mit diesem Testmuster kein weiterer Bitfehler auftritt. Falls mit diesem Auslesen aber ein weiterer Bitfehler auftritt, dann führt dieses zusammen mit der vorherigen Modifikation der Kontrollbits zur Signalisierung eines Bitfehlers, der sich aus der Addition der bei dem ersten und zweiten Testmuster auftretenden Bitfehler ergibt. Zwei an einem Mehrfachfehler beteiligte Einfachfehler müssen also nicht mehr bei demselben Testmuster erstmalig auftreten.

Eine besonders einfache Realisierung dieser erfindungsgemäßen Idee läßt sich dadurch erreichen, daß die Modifikation des Kontrollmusters in der Weise durchgeführt wird, daß genau diejenigen Kontrollbits invertiert werden, deren zugeordneten Syndrombits auf logisch 1 liegen. Wenn kein neuer Bitfehler auftritt, entsteht somit beim Auslesen und Überprüfen des so modifizierten Testmusters dasselbe Syndronmuster genaus dann, wenn der die Modifikation verursachende Bitfehler bei dem modifizierten Testmuster nicht erneut auftritt. Das Verhindern des erneuten Auftretens des ursprünglichen Bitfehlers wird aber gerade durch die von erstem zu zweitem Testmuster wechselnden Bitpolaritäten erreicht.

Im Falle eines Einfachfehlers beim Auslesen des ersten Testmusters kann aufgrund der erfindungsgemäßen Modifikation des Kontrollmusters des zweiten Testmusters keine vollständige Inversion des zweiten Testmusters erfolgen. Aus diesem Grunde werden bei einem Test mit nur zwei Testmustern in diesem Fall die modifizierten Kontrollstellen nicht in beiden Bitpolaritäten getestet. Will man die Vollständigkeit des Testverfahrens erhöhen, so besteht eine bevorzugte Möglichkeit darin, ein drittes Testmuster zu verwenden, das gegenüber dem zweiten Testmuster zumindest an denjenigen Kontrollbitstellen invertiert ist, die von der Modifikation im zweiten Testmuster betroffen werden.

Damit das erfindungsgemäße Verfahren auch bei dem Auftreten von Einfachfehlern im Kontrollmuster angewandt werden kann, muß das in diesem Fall entstandene Syndrommuster in der Weise umcodiert werden, daß es bei der Modifikation des Kontrollmusters des nächstfolgenden Testmusters in der gleichen erfindungsgemäßen Weise wirkt wie das Syndrommuster bei einem Bitfehler im Datenmuster. Dies kann dadurch erreicht werden, daß das Syndrommuster bei Einfachfehlern im Kontrollmuster in ein Syndrommuster für einen bestimmten Bitfehler im Datenmuster umcodiert wird und erst anschließend zur Modifikation des Kontrollmusters herangezogen wird. Weitere Maßnahmen, die für die Durchführung des speziellen erfindungsgemäßen Verfahrens ebenso von Bedeutung sind, werden im folgenden bei der Erklärung der Figuren mit erläutert.

Es zeigen
FIG 1 eine bestimmte algebraische Vorschrift, den sogenannten modifizierten Hamming-Code,
FIG 2 eine Schaltungsanordnung zur Durchführung des erfindungsgemäßen Verfahrens,
FIG 3 Struktogramm zur Darstellung der Umcodierung des Syndrommusters,
FIG 4 Tabelle zur Umcodierung bestimmter Eingangssyndrommuster,
FIG 5 erste Einrichtung V1 zur Erzeugung des Kontrollmusters,
FIG 6 zweite Einrichtung V2, zur Überprüfung des jeweils ausgelesenen Testmusters
FIG 7 bis 13 Beispiele spezieller erfindungsgemäßer Testabläufe.

FIG 1 ist bereits vorher erläutert.

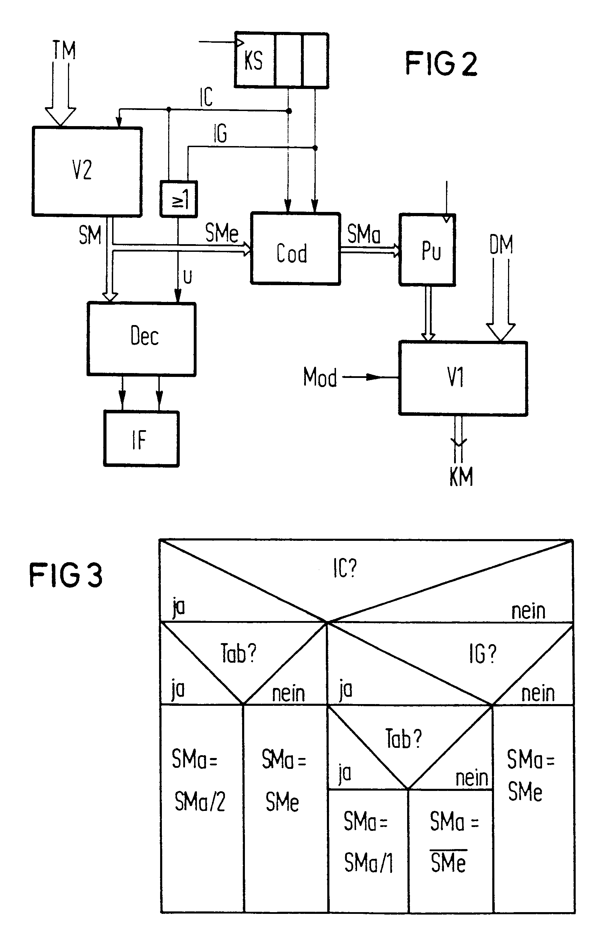

Figur 2 zeigt eine Schaltungsanordnung zur Durchführung der Erfindung. Bei dieser Schaltungsanordnung handelt es sich im wesentlichen um dieselbe, die auch die erwähnte EDC-Überprüfung durchführt. Allerdings arbeitet sie bei dem erfindungsgemäßen Testverfahren in einer modifizierten Betriebsart und ist durch einen Syndromumcodierer Cod zur Umcodierung bestimmter Syndrommuster ergänzt. Die Schaltungsanordnung verarbeitet ein 32 Bit breites Datenmuster DM und ein 7 Bit breites Kontrollmuster KM, was im Normalbetrieb die Korrektur von Einfachbitfehlern, d. h. Bitfehlern der Ordnung 1 sowie das Erkennen der Bitordnung 2 ermöglicht. Die Schaltungsanordnung dient im erfindungsgemäßen Betrieb zum Testen auf Bitfehler über der Ordnung 1.

Eine erste Einrichtung V1 dient zur Erzeugung des Kontrollmusters, das zusammen mit dem Datenmuster als Testmuster TM in die kleinste adressierbare Einheit des Speichermediums eingeschrieben wird. Die Erzeugung des Kontrollmusters erfolgt im Prinzip nach dem Code gemäß FIG 1 aus dem Datenmuster, jedoch wird ab dem zweiten Testzyklus über einen Syndrompuffer Pu zusätzlich ein Syndrommuster SM zur Modifikation des Kontrollmusters mit einbezogen. Die Einbeziehung des Syndrommusters SM in die Bildung des Kontrollmusters wird über ein Steuersignal Mod gesteuert. In FIG 2 ist die Bereitstellung des Datenmusters DM vorausgesetzt. Da für den erfindungsgemßen Test höchstens drei Testmuster benötigt werden, und das Datenmuster des dritten Testmusters vorzugsweise mit dem des zweiten Testmusters übereinstimmt, sind für den Test einer kleinsten adressierbaren Einheit nur zwei verschiedene, zueinander vollständig inverse Datenmuster erforderlich. Für die Bereitstellung dieser Datenmuster gibt es zwei verschieden vorteilhafte Verfahren. Das eine Verfahren besteht in einfacher Weise darin, die beiden notwendigen Datenmuster zu speichern und für den Test aufzurufen. Das bedeutet aber zwangsläufig, daß alle kleinsten adressierbaren Einheiten mit denselben zwei Datenmustern getestet werden müssen und deshalb die im Speichermedium abgespeicherten Daten durch den Test entweder verloren gehen oder vor dem Test in ein anderes Speichermedium gerettet werden müssen.

Das andere Verfahren besteht darin, eine zusätzliche Einrichtung zur Invertierung des Datenmusters vorzusehen. Dies hat zur Folge, daß man als Datenmuster des ersten Testmusters das im Speichermedium abgespeicherte Datenwort heranziehen kann, welches dann für die späteren Testmuster durch die zusätzliche Einrichtung invertiert und schließlich nach dem Test durch nochmaliges Invertieren wieder in die getestete kleinste adressierbare Einheit eingeschrieben werden kann. Die im Speichermedium abgespeicherten Daten bleiben auf diese Weise trotz des Tests erhalten.

Eine zweite Einrichtung V2 übernimmt das ausgelesene Testmuster (TM), erzeugt nach dem Code gemäß FIG 1 aus dem Datenmuster erneut ein Kontrollmuster und anschließend durch EXOR-Bildung über sämtliche Bitstellen des neuen Kontrollmuster mit dem alten Kontrollmuster ein Syndrommuster SM. Ein Syndromdecoder Dec unterscheidet aufgrund des Syndrommusters zwischen Einfach- und Mehrfachfehlern und signalisiert einer Schnittstelle IF, die von einer Steuerung nach jedem Testzyklus abgefragt wird, das Erkennen eines Einfach- oder Mehrfachfehlers. Die Betriebsart des Syndromdecoders Dec für das erfindungsgemäße Testverfahren wird durch ein Steuersignal U eingestellt, bei dessen Anliegen die Signalisierung von bestimmten Mehrfachfehlern, die bei der erfindungsgemäßen Übertragung eines im Kontrollmuster aufgetretenen Einfachfehlers ausgelöst würde, unterdrückt wird. Die Bildung des Steuersignals U erfolgt über ein ODER-Glied aus einem Steuersignal IC und einem Steuersignal IG. Die beiden letztgenannten Steuersignale werden von einer Kippstufe KS erzeugt, die ihrerseits von einer übergeordneten Steuerung eingestellt wird. Die beiden Steuersignale dienen des weiteren dazu, die Betriebsart eines Syndromumcodierers Cod festzulegen, der das Syndrommuster in einer noch zu beschreibenden Art umcodiert, und das so umcodierte Syndrommuster über den bereits erwähnten Syndrompuffer Pu an die erste Einrichtung V1 liefert. Das Steuersignal IC wirkt außerdem auf die zweite Einrichtung V2, was später noch näher erläutert wird.

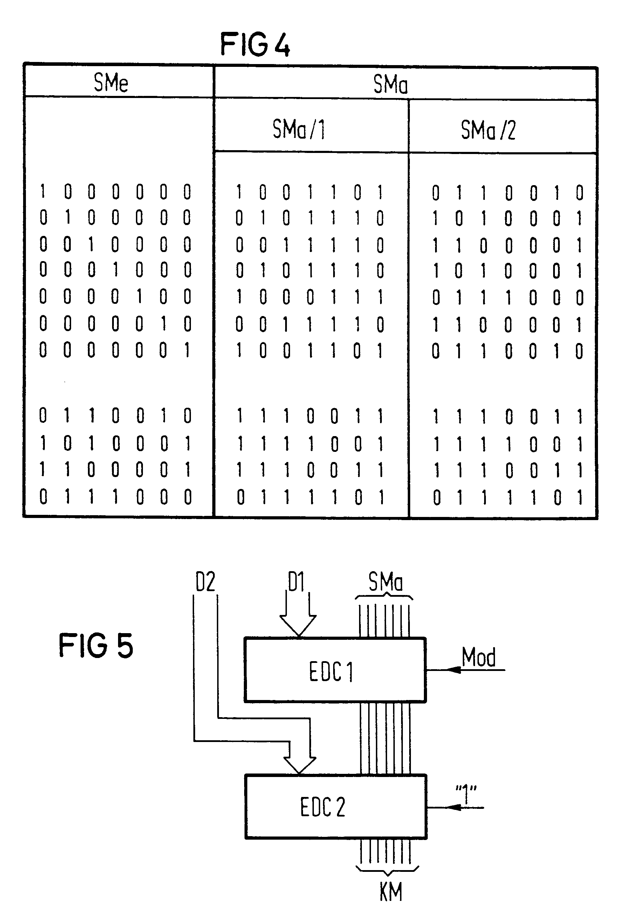

Figur 3 zeigt das Struktogramm zur Darstellung der Umcodierung des Syndrommusters durch den Syndromumcodierer Cod. Liegt beispielsweise das Steuersignal IC auf "1" (3. Testzyklus) und handelt es sich bei einem am Eingang des Syndromumcodierers Cod anliegenden Eingangssyndrommuster SMe um ein durch eine Tabelle Tab in Figur 4 genanntes, so erzeugt der Syndromumcodierer ein Ausgangssyndrommuster SMa, das sich aus der Spalte SMa/2 der Tabelle entnehmen läßt. Im anderen Fall läßt der Syndromumcodierer das Syndrommuster passieren ohne es zu ändern, d.h. das Ausgangssyndrommuster SMa ist gleich dem Eingangssyndrommuster SMe. Liegt umgekehrt nicht das Steuersignal IC, sondern das Steuersignal IG auf "1" (2. und 4. Testzyklus), und handelt es sich bei dem am Eingang des Syndromumcodierers anliegenden Eingangssyndrommuster um ein durch die Tabelle Tab in Figur 4 genanntes, so erzeugt der Syndromumcodierer ein Ausgangssyndrommuster SMa das sich aus Spalte SMa/1 der Tabelle in Figur 4 entnehmen läßt. Im anderen Fall invertiert der Syndromumcodierer das Eingangssyndrommuster SMe. Diese Invertierung wird für die Erzeugung eines inversen Kontrollmusters, wie es für das zweite Testmuster benötigt wird, herangezogen.

Figur 4 zeigt die bereits genannte Tabelle Tab zur Umcodierung bestimmter Eingangssyndrommuster SMe. Die eine Gruppe der bestimmten Eingangssyndrommuster wird durch die Syndrommuster von Einfachfehlern im Kontrollmuster gebildet, die für die erfindungsgemäße Übertragung eines Einfachfehlers in Syndrommuster von bestimmten ungeradzahligen Mehrfachfehlern umcodiert werden. Die andere Gruppe entsteht deshalb, weil auch die Kontrollbits in beiden Polaritäten geprüft werden müssen, obwohl sie gleichzeitig die Übertragung von Bitfehlern gewährleisten müssen. Dieser Umstand wird später anhand eines Beispiels noch näher erläutert.

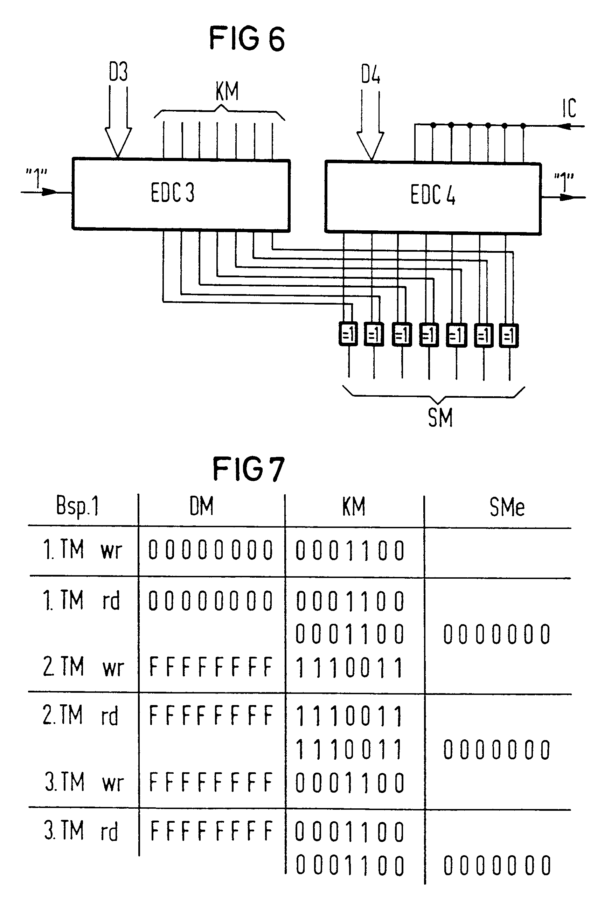

Figur 5 zeigt die erste Einrichtung V1 zur Erzeugung des jeweiligen Kontrollmusters aus dem Datenmuster. Sie besteht aus zwei Kontroller-Bausteinen EDC1 und EDC2, die aus jeweils 16 Datenbits gemäß dem Code von Figur 1 sieben Kontrollbits bilden und diese nach EXOR-Bildung mit den übrigen Eingängen an die Ausgänge des Bausteins weitergeben, die das einzuschreibende Kontrollmuster KM darstellen. An dem Dateneingang D1 des ersten Bausteines EDC1 liegen dabei die Bits 0 bis 15 des einzuschreibenden Datenmusters und an dessen übrigen Eingängen das Ausgangssyndrommuster SMa des Syndromumcodierers Cod. Am Dateneingang D2 des zweiten Bausteins EDC2 liegen die Bits 16 bis 31 des einzuschreibenden Datenmusters und an dessen übrigen Eingängen die Ausgänge des ersten Bausteins EDC1. Das Steuersignal Mod am ersten Baustein EDC1 bestimmt, ob das umcodierte Syndrommuster, d.h. das Ausgangssyndrommuster SMa in die Bildung der Kontrollbits miteinbezogen wird oder nicht. Diese Einbeziehung erfolgt ab der Bildung des zweiten Testmusters. An den Ausgängen des zweiten Bausteins EDC2 liegt somit das von der ersten Einrichtung V1 erzeugte Kontrollmuster, das zusammen mit dem Datenmuster aus dem es gebildet wurde, als ein Testmuster TM in die kleinste adressierbare Einheit eingeschrieben wird. Die notwendige Invertierung des Kontrollmusters für das zweite Testmuster, das gegenüber dem ersten Testmuster grundsätzlich invertiert ist, wird durch die Miteinbeziehung des Ausgangssyndrommusters SMa bewirkt. Der Syndromumcodierer dient in diesem Fall nicht nur der Umcodierung spezieller Syndrommuster für die Übertragung spezieller Bitfehler in das nächstfolgende Syndrommuster, sondern bewirkt gleichzeitig die Invertierung des Kontrollmusters für das zweite Testmuster. Das Steuersignal IG muß dabei gemäß dem Struktogramm in FIG 3 auf "1" liegen. Die genannte Invertierung des Kontrollmusters für das zweite Testmuster ist deshalb notwendig, weil die für das Ausführungsbeispiel speziell gewählte algebraische Vorschrift nach FIG 1 zwei zueinander inversen Datenmustern das gleiche Kontrollmuster zuordnet.

Das auf die genannte Art erzeugte Kontrollmuster des zweiten Testmusters wird zusammen mit dem Datenmuster in die kleinste adressierbare Einheit eingeschrieben und im darauffolgenden dritten Testzyklus wieder ausgelesen. In der zweiten Einrichtung V2 wird dann aus dem Datenmuster des ausgelesenen zweiten Testmusters erneut ein Kontrollmuster gebildet und dieses Kontrollmuster mit dem ausgelesenen Kontrollmuster verglichen. Vor diesem Vergleich muß allerdings das erneut gebildete Kontrollmuster zusätzlich invertiert (bzw. das ausgelesene Kontrollmuster rückinvertiert) werden. Diese Maßnahme wird in der zweiten Einrichtung V2 bei Anliegen des Steuersignals IC bewirkt.

Figur 6 zeigt den Aufbau der zweiten Einrichtung V2, die einen dritten und einen vierten Kontroller-Baustein EDC3 und EDC4 beinhaltet, deren Funktionsweise die gleiche ist wie die der in Figur 5 erwähnten Kontroller-Bausteine. Am Dateneingang D3 des dritten Kontroller-Bausteins EDC3 liegen die Bits 0 bis 15 des ausgelesenen Datenmusters an und an dessen übrigen Eingängen die Bits des ausgelesenen Kontrollmusters. Am Dateneingang D4 des vierten Kontroller-Bausteins EDC4 liegen die Bits 16 bis 31 des ausgelesenen Datenmusters an und an dessen übrigen Eingängen entweder lauter Nullen oder lauter Einsen, entsprechend dem logischen Zustand "0" oder "1" des Steuersignals IC. Die Ausgänge des dritten Kontroller-Bausteins EDC3 und des vierten Kontroller-Bausteins EDC4 werden durch EXOR-Bildung miteinander verknüpft, wodurch sich das Syndrommuster SM als Ergebnis des Vergleichs zwischen ausgelesenem Kontrollmuster und erneut gebildetem Kontrollmuster ergibt, das zum einen zum Syndromdecoder und zum anderen zum Syndromumcodierer geführt wird.

Zur Verdeutlichung des bisher Gesagten werden im folgenden verschiedene Beispiele für das Auftreten von Bitfehlern und deren erfindungsgemäße Behandlung anhand der FIG 7 bis FIG 13 erläutert.

Die Beispiele zeigen die drei nacheinanderfolgenden Testmuster TM eines Tests sowie die dazugehörigen Eingangssyndrommuster SMe, wobei die Testmuster jeweils aus einem Datenmuster DM und einem Kontrollmuster KM bestehen. Die Testmuster werden dabei in die kleinste adressierbare Einheit eingeschrieben (TMwr) und im darauffolgenden Testzyklus wieder ausgelesen (TMrd). Die Darstellung der Datenmuster ist aus Gründen der kürzeren Schreibweise hexadezimal. Das erneut gebildete Kontrollmuster ist in den Beispielen jeweils unterhalb des ausgelesenen Kontrollmusters bzw. neben dem Eingangssyndrommuster SMe dargestellt.

Das Beispiel 1 in FIG 7 zeigt den Testablauf für eine bestimmte kleinste adressierbare Einheit, bei der kein Bitfehler festgestellt wird. Wie man sieht, sind mit dem Auslesen und Überprüfen des zweiten Testmusters auf Bitfehler bereits alle Bitstellen der betreffenden kleinsten adressierbaren Einheit in beiden Polaritäten überprüft.

Da die erneute Bildung des Kontrollmusters KM in der zweiten Einrichtung V2 grundsätzlich nach dem Code von FIG 1 erfolgt, muß das erneut gebildete Kontrollmuster für die Überprüfung des ausgelesenen zweiten Testmusters im dritten Testzyklus zusätzlich invertiert werden, was, wie bereits erwähnt, über das Steuersignal IC bewirkt wird.

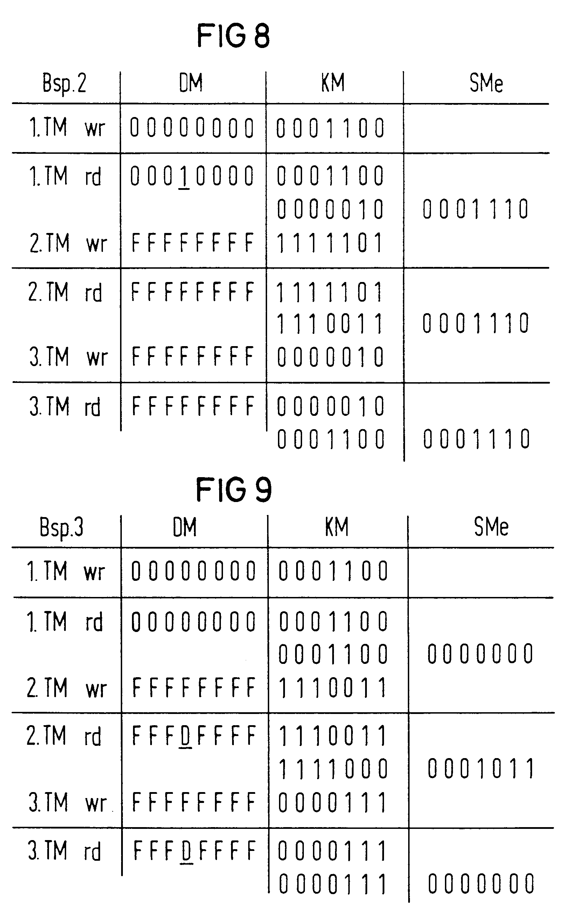

Das Beispiel 2 in FIG 8 zeigt den Testablauf mit einem Einfachfehler an Bitstelle 17 im Datenmuster des ersten Testmusters. Die betreffende Bitstelle ist zur Kennzeichnung unterstrichen. Wie man sieht, ist das Kontrollmuster des zweiten Testmusters vollständig invers zum Kontrollmuster des dritten Testmusters. Dies beruht auf dem "aktiven" Steuersignal IG (siehe FIG 2) beim zweiten Testmuster.

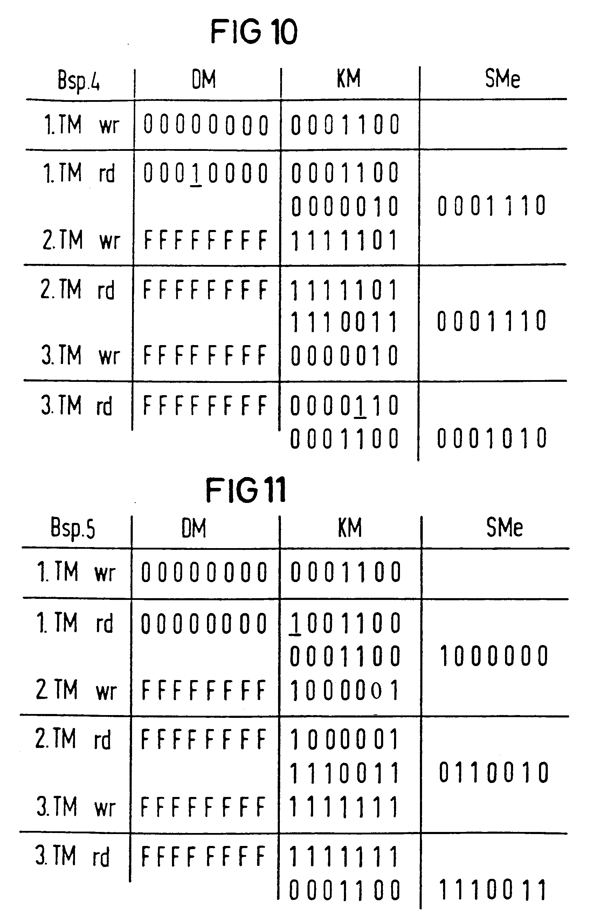

Das Beispiel 3 in Fig. 9 zeigt den Testablauf mit einem Einfachfehler im Datenmuster des zweiten Testmusters. Wie man sieht ist dieser Bitfehler nur bei seinem Auftreten im zweiten Testmuster wirksam, da die Wirksamkeit dieses Bitfehlers, die durch das Syndrommuster gekennzeichnet wird, durch sein nochmaliges Auftreten wieder verlorengeht.

Das Beispiel 4 in FIG 10 zeigt den Testablauf mit einem Einfachfehler im Datenmuster des ersten Testmusters und einem Einfachfehler im Kontrollmuster des dritten Testmusters. Wie man sieht, ergibt sich nach Auslesen des dritten Testmusters ein geradzahliges Syndrommuster, das zur Signalisierung eines Mehrfachfehlers führt.

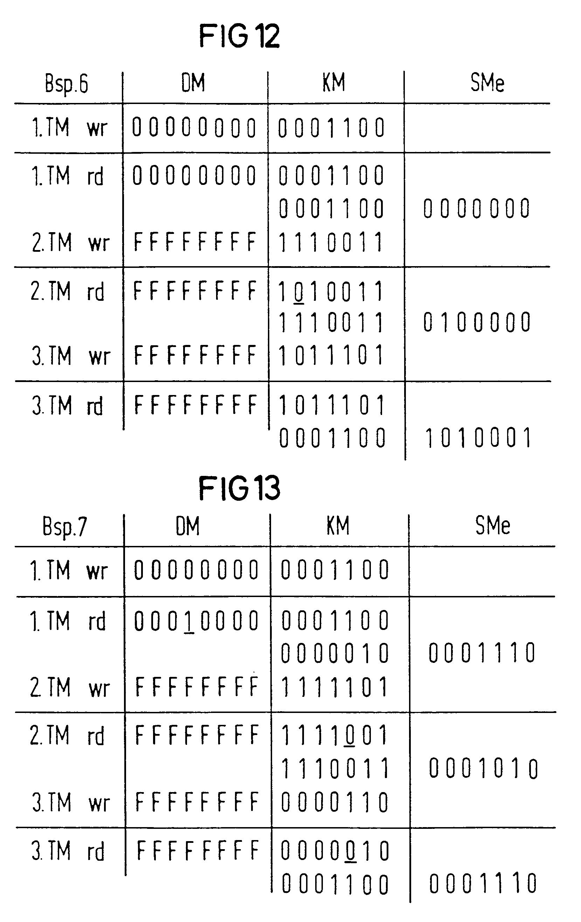

Das Beispiel 5 in FIG 11 zeigt den Testablauf bei einem Einfachfehler im Kontrollmuster des ersten Testmusters. Um das erfindungsgemäße Übertragen des Syndrommusters eines Einfachfehlers in den nächsten Zyklus auch für Einfachfehler im Kontrollmuster zu gewährleisten, findet eine Umcodierung eines solchen Syndrommusters in ein Syndrommuster mit drei Einsen (ungeradzahliger Mehrfachfehler) statt, welches dann zur Modifikation des neu einzuschreibenden Kontrollmusters herangezogen wird. Ein weiteres Problem besteht darin, daß außer der Übertragung dieses Einfachfehlers im Kontrollmuster auch gewährleistet sein muß, daß die übrigen Kontrollbits invers geprüft werden. Für die Lösung dieses Problems ist es notwendig, das Syndrommuster mit drei Einsen, das bei der Übertragung eines Einfachfehlers im Kontrollmuster entsteht, im nächsten Testmuster - falls kein weiterer Bitfehler auftritt - in ein Syndrommuster zu verwandeln, das fünf Einsen enthält. Dieses geschieht ebenfalls mit Hilfe des Umcodierers gemäß der Tabelle in FIG 4. Auch beim Auslesen dieses Syndrommusters wird die Signalisierung bestimmter ungeradzahliger Mehrfachfehler mit Hilfe des Steuersignals U unterdrückt.
Die genannte Verwandlung des Syndrommusters eines Einfachfehlers im Kontrollmuster in einen ungeradzahligen Mehrfachfehler (Syndrommuster mit drei bzw. fünf Einsen) geschieht deshalb, weil bei Auftreten eines weiteren Einfachfehlers (im Kontrollmuster oder Datenmuster) aus dem ungeradzahligen Syndrommuster immer ein geradzahliges Syndrommuster wird, und dieses geradzahlige Syndrommuster immer zur Signalisierung eines Mehrfachfehlers führt.

Durch die erfindungsgemäße Umcodierung des Syndrommusters wird außerdem sichergestellt, daß eine falsch ausgelesene Bitstelle des Kontrollmusters beim Einschreiben der nachfolgenden Testmuster beibehalten wird. Dies ist im Falle eines sporadisch aufgetretenen Einfachfehlers im Kontrollmuster wichtig, da diese sonst zur Alarmierung eines Mehrfachfehlers führen würde.

Das Beispiel 6 in FIG 12 zeigt den Testablauf mit einem Einfachfehler im Kontrollmuster des zweiten Testmusters.

Das Beispiel 7 in FIG 13 zeigt den Testablauf bei einem Einfachfehler im Datenmuster des ersten Testmusters sowie einem Einfachfehler im Kontrollmuster des zweiten Testmusters, wobei bei dem Einfachfehler im Kontrollmuster eine Kontrollbitstelle betroffen ist, die wegen der erfindungsgemäßen Übertragung des Einfachfehlers im ersten Testmuster gegenüber der Kontrollbitstelle im ersten Testmuster nicht invertiert ist.

## Patentansprüche

1. Verfahren zum Testen einer kleinsten adressierbaren Einheit eines Speichermediums eines RAM-Speichersystems auf Verursachen von Mehrfachbitfehlern, demgemäß
a) ein erstes Testmuster in die kleinste adressierbare Einheit des Speichermediums eingeschrieben wird, das sich aus einem Datenmuster und einem Kontrollmuster zusammensetzt, wobei das Kontrollmuster nach einer bestimmten algebraischen Vorschrift aus dem Datenmuster gebildet ist,
b) das erste Testmuster später wieder ausgelesen wird, wobei aus dem ausgelesenen Datenmuster nach der genannten algebraischen Vorschrift erneut ein Kontrollmuster gebildet wird,
c) das erneut gebildete Kontrollmuster mit dem ausgelesenen Kontrollmuster verglichen wird, wodurch sich ein sog. Syndrommuster ergibt, das anzeigt, ob ein Bitfehler aufgetreten ist und ob dieser aufgetretene Bitfehler ein Mehrfachbitfehler ist,
d) die Verfahrensschritte a) bis c) mit einem zweiten Testmuster wiederholt werden, das bei vorherigem Ausbleiben eines Bitfehlers gegenüber dem ersten Testmuster vollständig invertiert ist bzw. bei vorherigem Auftreten eines Bitfehlers die Invertierung des Kontrollmusters auf diejenigen Bitstellen beschränkt ist, bei denen ausgelesenes Bit und berechnetes Bit übereinstimmt, wodurch sich bei der wiederholten Durchführung der Verfahrensschritte a) bis c) im Verfahrensschritt c) ein Syndrommuster ergibt, das einen Bitfehler anzeigt, der sich aus der Addition von bei dem ersten und zweiten Testmuster getrennt aufgetretenen Bitfehlern ergibt,
e) die Verfahrensschritte a) bis c) mit einem dritten Testmuster wiederholt werden, das gegenüber dem zweiten Testmuster zumindest an denjenigen Kontrollbitstellen invertiert ist, die beim zweiten Testmuster nicht invertiert worden sind.

2. Verfahren nach Patentanspruch 1,
**dadurch gekennzeichnet,**
daß als erstes Testmuster für jede kleinste adressierbare Einheit des Speichermediums das gleiche fest vorgegebene Bitmuster verwendet wird.

3. Verfahren nach Patentanspruch 1,
**dadurch gekennzeichnet,**
daß als erstes Testmuster das sich bei Beginn des Tests in der jeweiligen kleinsten adressierbaren Einheit des Speichermediumms befindliche Speicherwort verwendet wird, womit der Verfahrensschritt a) für das erste Testmuster als bereits ausgeführt gilt.

4. Verfahren nach Anspruch 2,
**dadurch gekennzeichnet,** daß
für aufeinanderfolgende Tests verschiedene erste Testmuster verwendet werden.

5. Verfahren nach einem der Ansprüche 1 bis 4,
**dadurch gekennzeichnet,** daß
a) der Vergleich des erneut gebildeten Kontrollmusters mit dem ausgelesenen Kontrollmuster nach Verfahrensschritt c) des Anspruchs 1 durch EXOR-Bildung über die einzelnen einander entsprechenden Bitstellen erfolgt,
b) die Modifikation des Kontrollmusters anhand des sich aus dem Vergleich ergebenden Syndrommusters (SM) in der Weise erfolgt, daß die Bits des Kontrollmusters genau an den Stellen invertiert werden, an denen die Bits dieses Syndrommusters eine logische Eins aufweisen.

6. Verfahren nach einem der Ansprüche 1 bis 5,
**dadurch gekennzeichnet,** daß
ein Syndrommuster (SM), das einen Einfachfehler im Kontrollmuster anzeigt, in ein Syndrommuster eines bestimmten Bitfehlers im Datenmuster umcodiert wird, bevor es zur Modifikation des Kontrollmusters des nächstfolgenden Testmusters herangezogen wird.

7. Schaltungsanordnung, insbesondere zur Durchführung des erfindungsgemäßen Verfahrens nach Patentanspruch 1,
**gekennzeichnet durch**
a) eine erste Einrichtung (V1) zur Erzeugung und Modifikation desjenigen Kontrollmusters, das zusammen mit dem Datenmuster als Testmuster in die kleinste adressierbare Einheit des Speichermoduls eingeschrieben wird,
b) eine zweite Einrichtung (V2), die das ausgelesene Testmuster übernimmt, aus dem Datenmuster nach der bestimmten algebraischen Vorschrift erneut ein Kontrollmuster bildet und durch EXOR-Bildung des erneut gebildeten Kontrollmusters mit dem ausgelesenen Kontrollmuster ein Syndrommuster (SM) erzeugt, das der ersten Einrichtung (V1) zur Modifikation der Bits des Kontrollmusters für das nächste Testmuster zugeführt wird,
c) einen Decoder (Dec) zur Decodierung des Syndrommusters und ggf. anschließenden Signalisierung eines über der bestimmten Ordnung liegenden Bitfehlers,
d) eine dritte Einrichtung, über die die Betriebsweise der ersten und zweiten Einrichtung sowie des Decoders gesteuert wird.

8. Schaltungsanordnung nach Anspruch 7, insbesondere zur Durchführung des erfindungsgemäßen Verfahrens nach Anspruch 6,
**gekennzeichnet durch**
einen Syndromumcodierer (Cod), durch den das Syndrommuster umcodiert wird, bevor es zur Modifikation des Kontrollmusters der ersten Einrichtung (V1) zugeführt wird.

## Claims

1. Method of testing a smallest addressable unit of a storage medium of a RAM memory system for causes of multiple bit errors, according to which
1) a first test pattern is written into the smallest addressable unit of the storage medium, which test pattern is composed of a data pattern and a monitoring pattern, the monitoring pattern being formed from the data pattern according to a defined algebraic rule,
b) the first test pattern is later read out, a monitoring pattern again being formed from the readout data pattern according to the said algebraic rule,
c) the newly formed monitoring pattern is compared with the read-out monitoring pattern, producing a so-called syndrome pattern, which indicates whether a bit error has occurred and whether this occurred bit error is a multiple bit error,
d) method steps a) to c) are repeated with a second test pattern which, given the prior absence of a bit error, is completely inverted with respect to the first test pattern or, given the prior occurrence of a bit error, the inversion of the monitoring pattern is restricted to those bit positions at which the read-out bit and the calculated bit match, as a result of which, on repeated carrying out of method steps a) to c), in method step c) there is obtained a syndrome pattern which indicates a bit error which results from the addition of bit errors occurring separately in the case of the first test pattern and the second test pattern,
e) method steps a) to c) are repeated with a third test pattern which is inverted with respect to the second test pattern, at least at those check bit positions which have not been inverted in the case of the second test pattern.

2. Method according to Patent Claim 1, characterized in that the same permanently prescribed bit pattern is used as the first test pattern for every smallest addressable unit of the storage medium.

3. Method according to Patent Claim 1, characterized in that the memory word situated in the respective smallest addressable unit of the storage medium at the beginning of the test is used as the first test pattern, whereby method step a) for the first test pattern is already considered executed.

4. Method according to Claim 2, characterized in that different first test patterns are used for successive tests.

5. Method according to one of Claims 1 to 4, characterized in that
a) the comparison of the newly formed monitoring pattern with the read-out monitoring pattern according to method step c) of Claim 1 is performed by EXOR formation over the individual bit positions corresponding to one another,
b) the modification of the monitoring pattern with reference to the syndrome pattern (SM) resulting from the comparison is performed by inverting the bits of the monitoring pattern precisely at the positions at which the bits of this syndrome pattern have a logical one.

6. Method according to one of Claims 1 to 5, characterized in that a syndrome pattern (SM) which indicates a single error in the monitoring pattern is recoded into a syndrome pattern of a defined bit error in the data pattern before it is used for modifying the monitoring pattern of the following test pattern.

7. Circuit arrangement, in particular for carrying out the method according to the invention as specified in Patent Claim 1, characterized by
a) a first means (V1) for generating and modifying that monitoring pattern which is written together with the data pattern into the smallest addressable unit of the memory module as the test pattern,
b) a second means (V2), which accepts the read-out test pattern, newly forms a monitoring pattern from the data pattern according to the defined algebraic rule and, by EXOR formation of the newly formed monitoring pattern with the read-out monitoring pattern, generates a syndrome pattern (SM), which is supplied to the first means (V1) for modifying the bits of the monitoring pattern for the next test pattern,
c) a decoder (Dec) for decoding the syndrome pattern and, if appropriate, subsequent signalling of a bit error lying above the defined order,
d) a third means, by which the operating mode of the first and second means and of the decoder is controlled.

8. Circuit arrangement according to Claim 7, in particular for carrying out the method according to the invention as specified in Claim 6, characterized by a syndrome recoder (Cod), by which the syndrome pattern is recoded before it is supplied to the first means (V1) for modifying the monitoring pattern.

## Revendications

1. Procédé de test d'une plus petite unité adressable d'un support de mémorisation d'un système RAM de mémorisation à cause d'erreurs sur plusieurs bits, selon lequel
a) on écrit un premier motif de test dans la plus petite unité adressable du support de mémorisation, ce motif de test se composant d'un motif de données et d'un motif de contrôle, le motif de contrôle étant formé à partir du motif de données suivant une règle algébrique déterminée,
b) on relit ultérieurement le premier motif de test, un motif de contrôle étant formé de nouveau à partir du motif de données lu suivant ladite règle algébrique,
c) on compare le motif de contrôle de nouveau formé au motif de contrôle lu, ce qui donne ce qu'on appelle un motif de syndrome, qui indique si une erreur binaire est apparue et si cette erreur binaire apparue est une erreur portant sur plusieurs bits,
d) on répète les étapes opératoires a) à c) avec un deuxième motif de test, qui est complètement inversé par rapport au premier motif de test, s'il n'y a pas d'erreur binaire au préalable ou qui limite, s'il est apparu au préalable une erreur binaire, l'inversion du motif de contrôle à celles des positions binaires, pour lesquelles le bit lu et le bit calculé coïncident, ce qui donne en répétant les étapes opératoires a) à c), dans l'étape c), un motif de syndrome, qui indique une erreur binaire qui résulte de l'addition d'erreurs binaires apparues séparément dans les premier et deuxième motifs de test,
e) on répète les étapes opératoires a) à c) avec un troisième motif de test, qui est inversé par rapport au deuxième motif de test au moins aux positions binaires de contrôle, qui n'ont pas été inversées dans le deuxième motif de test.

2. Procédé suivant la revendication 1, caractérisé en ce que l'on utilise comme premier motif de test pour chaque plus petite unité adressable du support de mémorisation le même motif binaire prescrit de façon fixe.

3. Procédé suivant la revendication 1, caractérisé en ce qu'on utilise comme premier motif de test le mot de mémoire se trouvant au début du test dans la plus petite unité adressable du support de mémorisation, l'étape opératoire a) pour le premier motif de test étant considérée comme déjà effectuée.

4. Procédé suivant la revendication 2, caractérisé en ce que l'on utilise pour des tests successifs des premiers motifs de test différents.

5. Procédé suivant l'une des revendications 1 à 4, caractérisé en ce que
a) la comparaison du motif de contrôle de nouveau formé au motif de contrôle lu suivant l'étape opératoire c) de la revendication 1 s'effectue par opération OU-EXCLUSIF sur les différentes positions binaires se correspondant,
b) la modification du motif de contrôle en référence au motif (SM) de syndrome résultant de la comparaison s'effectue de telle sorte que l'on inverse les bits du motif de contrôle précisément en les positions, où les bits de ce motif de syndrome ont un un logique.

6. Procédé suivant l'une des revendications 1 à 5, caractérisé en ce que l'on recode un motif (SM) de syndrome, qui indique une erreur simple dans le motif de contrôle, en un motif de syndrome d'une erreur binaire déterminée dans le motif de données, avant de l'utiliser pour modifier le motif de contrôle du motif de test suivant.

7. Montage, notamment destiné à la mise en oeuvre du procédé suivant l'invention suivant la revendication 1, caractérisé par
a) un premier dispositif (V1) destiné à produire et à modifier celui des motifs de contrôle, qui est écrit conjointement avec le motif de données en tant que motif de test dans la plus petite unité adressable du support de mémorisation,
b) un deuxième dispositif (V2), qui prend en charge le motif de test lu, forme à partir du motif de données suivant la règle algébrique déterminée de nouveau un motif de contrôle et qui produit par opération OU-EXCLUSIF entre le motif de contrôle de nouveau formé et le motif de contrôle lu un motif (SM) de syndrome, qui est envoyé au premier dispositif (V1) pour modifier les bits du motif de contrôle pour le motif de test suivant,
c) un décodeur (Dec) destiné à décoder le motif de syndrome et éventuellement à signaler ensuite une erreur binaire présente à cause de l'ordre déterminé,
d) un troisième dispositif, par lequel le mode de fonctionnement des premier et deuxième dispositifs ainsi que du décodeur sont commandés.

8. Montage suivant la revendication 7, notamment destiné à la mise en oeuvre du procédé suivant l'invention suivant la revendication 6,
caractérisé par
un transcodeur (Cod) de syndrome, par lequel le motif de syndrome est recodé, avant qu'il ne soit envoyé au premier dispositif (V1), pour la modification du motif de contrôle.
